# EUROPÄISCHE PATENTSCHRIFT

(11) **EP 3 433 682 B1**
(45) Veröffentlichungstag und Bekanntmachung des Hinweises auf die Patenterteilung: **07.04.2021**
(21) Anmeldenummer: 17706176.9
(22) Anmeldetag: 14.02.2017
(51) Int. Cl.: G05B 9/02

(54) **SICHERHEITSSTEUERUNG UND VERFAHREN ZUM BETREIBEN EINER SICHERHEITSSTEUERUNG**
SAFETY CONTROLLER AND METHOD FOR OPERATING A SAFETY CONTROLLER
COMMANDE DE SÉCURITÉ ET PROCÉDÉ DE FONCTIONNEMENT D'UNE COMMANDE DE SÉCURITÉ

(30) Priorität: 24.03.2016 DE 102016204965
(43) Veröffentlichungstag der Anmeldung: 30.01.2019
(73) Patentinhaber: WAGO Verwaltungsgesellschaft mbH, 32423 Minden (DE)
(72) Erfinder: LASCHINSKY, Maxim, 32425 Minden (DE); VOSS, Christian, 32427 Minden (DE)
(74) Vertreter: Lang, Johannes
(86) Internationale Anmeldenummer: PCT/EP2017/053212
(87) Internationale Veröffentlichungsnummer: WO 2017/162371

(56) Entgegenhaltungen:
- DE-A1- 3 225 455
- DE-A1- 10 163 010
- DE-A1-102007 018 468

## Beschreibung

### 1. Technisches Gebiet

Die vorliegende Erfindung betrifft eine Sicherheitssteuerung und ein Verfahren zum Betreiben einer Sicherheitssteuerung.

### 2. Technischer Hintergrund

In der Automatisierungstechnik werden Sicherheitssteuerungen verwendet, um sicherheitskritische Anlagen und Prozesse zu überwachen und einen sicheren Betrieb zu gewährleisten. Das zeitnahe Erkennen von Abweichungen vom Normalbetrieb ist dabei von großer Bedeutung, um entsprechende Gegenmaßnahmen noch innerhalb einer sinnvollen Zeitspanne durchzuführen.

Bei einem Schweißroboter zum Beispiel werden die Ränder des Arbeitsgebiets des Roboters mit Lichtschranken überwacht. Sollte zum Beispiel ein Mensch eine diese Lichtschranken passieren, so muss von der Sicherheitsteuerung gewährleistet sein, dass die Anlage in einen sicheren Zustand versetzt wird, bevor dem Menschen ein Schaden zukommt. Dies dient dem Schutz von Menschen in der unmittelbaren Umgebung einer Anlage aber auch dem Schutz der Anlage selbst.

Zum Schutz vor einem Ausfall der Sicherheitssteuerung, und damit einem unkontrollierten Arbeiten der Anlage werden Sicherheitssteuerungen redundant betrieben, d.h. auf mindestens zwei Prozessoren oder Controllern wird die gleiche Software zum Steuern einer Anlage oder eines Prozesses möglichst taktsynchron ausgeführt.

Sogenannte Lock-Step-Controller, wie z.B. der TMS570 von Texas Instruments, weisen zwei Prozessorkerne auf, wobei auf jedem Prozessorkern jeweils das gleiche Programm ausgeführt wird. Da der Controller nur einen Quarz als Taktquelle für beide Prozessorkerne aufweist, werden die beiden Programme taktsynchron ausgeführt. Im Fall eines Fehlers der Taktquelle können sicherheits-gerichtete Ausgänge allerdings durch die Prozessorkerne nicht mehr abgeschaltet werden.

In der Druckschrift EP 1916 581 A2 wird eine gegenseitige Überwachung von zwei Controllern beschrieben, wodurch Taktfehler aufdeckt werden können. Dabei überwacht zuerst ein erster Controller die Genauigkeit einer Referenzzeitbasis eines zweiten Controllers, und nach einem vorgegebenen Muster werden dann die Rollen der beiden Controller getauscht und der zweite Controller überwacht die Genauigkeit des ersten Controllers. Dadurch soll sichergestellt werden, dass alle Sicherheitsfunktionen, die auf den beiden Controllern ausgeführt werden, in einer vorgegebenen Zeit ablaufen. Sollte dabei ein Fehler festgestellt werden, z.B. bei einer Zeitüberschreitung in der Ausführung der Sicherheitsfunktionen, nehmen die Controller den sicheren Zustand ein.

Bei diesem Verfahren kann allerdings der Zeitpunkt, wann ein Fehler festgestellt wird, nur ungenau angegeben werden. Die exakte Angabe von Reaktionszeiten einer Steuerung ist damit aber nicht möglich. Solche Reaktionszeiten sind jedoch im Bereich von Sicherheitsfunktionen von entscheidender Bedeutung und sollten so exakt wie möglich bestimmbar sein. Außerdem treten während des Ausführens der Sicherheitsschleifen relativ häufig Wartezeiten auf. Diese sollten vermieden werden, um einen Programmablauf nicht unnötig zu verlängern und eine zeitnahe Reaktion auf auftretende Fehler zu gewährleisten.

Die Druckschrift DE 10 2007 018 468 A1 zeigt eine Vorrichtung zur Ansteuerung von Personenschutzmitteln in einem Fahrzeug, wobei die Vorrichtung nur eine Steuerung verwendet und auf getrennten Hardwarepfaden mit separaten Takten Sensordaten weitergeleitet werden.

Die Druckschrift DE 10163 010 A1 betrifft eine Vorrichtung und ein Verfahren zur sicheren Geschwindigkeitsüberwachung. Die Vorrichtung umfasst zwei Prozessoren, die jeweils eine Überwachung der Geschwindigkeitsgrenzen auf unterschiedliche Weise durchführen und die Ergebnisse kreuzweise miteinander verglichen werden. Die beiden Prozessoren arbeiten auf der Grundlage einer gemeinsamen Zeitbasis, wobei in beiden Prozessoren über jeweilige Zeitgeber jeweilige Taktsignale erzeugt werden, die dem jeweils anderen Prozessor zum Vergleich mit einem Nominalwert bereitgestellt werden.

Die Druckschrift DE 32 25 455 A1 betrifft ein Verfahren und eine Anordnung zum sicheren Betrieb eines Steuersystems, das beispielsweise aus mehreren parallelgeschalteten Rechnern aufgebaut ist.

Es ist die Aufgabe der vorliegenden Erfindung eine Sicherheitssteuerung und ein Verfahren zum Betreiben einer Sicherheitssteuerung bereitzustellen, welche die oben genannten Erfordernisse erfüllen.

### 3. Zusammenfassung der Erfindung

Die Aufgabe wird gelöst durch eine Sicherheitssteuerung gemäß Anspruch 1 sowie durch ein Verfahren zum Betreiben einer Sicherheitssteuerung nach Anspruch 5.

Insbesondere wird die Aufgabe gelöst durch eine Sicherheitssteuerung, aufweisend einen ersten Controller eingerichtet zum Steuern einer Anlage oder eines Prozesses mit einem ersten Taktgeber zum Generieren eines ersten Taktsignals; einen separaten zweiten Controller eingerichtet zum Steuern der Anlage oder des Prozesses mit einem zweiten Taktgeber zum Generieren eines zweiten Taktsignals; wobei das erste Taktsignal an einen ersten Eingang des ersten Controllers und an einen ersten Eingang des zweiten Controllers ausgegeben wird; und das zweite Taktsignal an einen zweiten Eingang des ersten Controllers und an einen zweiten Eingang des zweiten Controllers ausgegeben wird, wobei das erste Taktsignal ein gemeinsames Taktsignal zum synchronen Ausführen von Programmen auf dem ersten und zweiten Controller ist und die Frequenz des zweiten Taktsignals höher ist als die Frequenz des ersten Taktsignals.

Dadurch, dass ein gemeinsames Taktsignal an beiden Controllern bereitgestellt wird, wird ein synchrones Ausführen der beiden Programme auf dem ersten und dem zweiten Controller möglich. Die Controller selbst können dabei zum Beispiel Mikrocontroller, CPUs oder programmierbare Logiken sein. Dem ersten Taktsignal wird mit dem zweiten Taktsignal ein Referenztaktsignal zur Verfügung gestellt. Bei einem Vergleich der beiden Taktsignale miteinander können dadurch Taktfehler aufgedeckt werden. Dies gilt sowohl für Taktfehler des ersten Taktsignals als auch für Taktfehler des zweiten Taktsignals. Bevorzugt ist jeder Taktgeber ein Quarz. Durch separate erste und zweite Eingänge an dem ersten und dem zweiten Controller werden die beiden Taktsignale auch unabhängig voneinander und ohne zeitliche Beeinflussung an dem jeweiligen Controller bereitgestellt.

Die Frequenz des zweiten Taktsignals ist höher als die Frequenz des ersten Taktsignals. Dadurch kann eine ganzzahlige Anzahl von Takten des zweiten Taktsignals ermittelt werden, die während eines Taktintervalls des ersten Taktsignals auftritt. Je größer der Frequenzunterschied ist, desto genauer können Frequenzabweichungen des ersten Taktsignals und/oder des zweiten Taktsignals bezüglich ihrer jeweiligen Sollwerte detektiert werden.
Der erste Controller weist einen ersten Zähler und der zweite Controller weist einen zweiten Zähler auf, und das zweite Taktsignal wird dem ersten Zähler und dem zweiten Zähler zugeführt, und die Takte des zweiten Taktsignals werden von dem ersten und dem zweiten Zähler gezählt. Durch das Zählen von Takten des zweiten Taktsignals kann die Taktlänge des ersten Taktsignals einfach bestimmt werden. Bevorzugt sind die Zähler als Hardwarezähler ausgebildet. Das Zählen an sich kann dabei entweder ein nach oben Zählen oder ein nach unten Zählen sein.

Erfindungsgemäß löst das erste Taktsignal einen P1-Interrupt gleichzeitig in dem ersten und dem zweiten Controller aus; der erster Zähler und der zweite Zähler bestimmen die Anzahl der Takte des zweiten Taktsignals seit einem vorhergehenden P1-Interrupt; der erste Controller und/oder der zweite Controller ist eingerichtet, um die Zählerstände des jeweiligen ersten oder zweiten Zählers mit der Zeit zwischen zwei P1-Interrupts in Korrelation zu bringen; und der erste Controller und/oder der zweite Controller stellt eine Fehlerausgabe bereit, wenn der Controller feststellt, dass der Zählerstand des jeweiligen ersten oder zweiten Zählers außerhalb seines Referenzbereichs liegt.
Damit wird ein Fehler erkannt und ausgegeben, wenn sich die Taktfrequenz des ersten oder zweiten Taktgebers gegenüber ihrer jeweiligen Sollfrequenz so stark verändert, dass ein Toleranzbereich über- oder unterschritten wird, was durch die Controller erkannt wird, indem sie den Zählerstand des ersten oder zweiten Zählers mit seinem Referenzbereich vergleichen. Damit ist ein einfaches und zuverlässiges Erkennen von Frequenzabweichungen des ersten oder zweiten Taktgebers möglich, so dass ein Fehler in der Synchronität der beiden Controller der Sicherheitssteuerung zuverlässig detektiert wird. Durch Festlegung der Frequenz des ersten und zweiten Taktsignals und des Referenzbereichs ist eine exakte Angabe von Reaktionszeiten möglich.

Dabei werden während eines P1-Interrupts bevorzugt Prozesse der Priorität 1, d.h. Prozesse mit hoher Priorität, gestartet. Und bevorzugt wird ein P1-Interrupt mit einer Flanke eines P1-Interrupt-Requests ausgelöst. Zusätzlich wird der Zählerstand des ersten Zählers und der Zählerstand des zweiten Zählers während eines P1-Interrupts ausgewertet. Bevorzugt werden die Zählerstände des ersten und des zweiten Zählers mittels eines Fensterkomparators mit der Zeit zwischen zwei P1-Interrupts in Korrelation gebracht. Dabei sind die P1-Interrupts bevorzugt zwei aufeinanderfolgende P1-Interrupts. Der Referenzbereich ist bevorzugt eine, aufgrund der Frequenz des ersten Taktsignals und der Frequenz des zweiten Taktsignals, zu erwartende Anzahl von Takten mit einem bestimmten Toleranzbereich, welcher einen maximalen Wert und einen minimalen Wert des Referenzbereichs definiert. Bevorzugt lassen sich der maximale und der minimale Wert des Referenzbereichs beliebig festlegen, so dass eine individuelle Anpassung der zulässigen Abweichung in den Frequenzen möglich ist.

Bevorzugt bewirkt die Fehlerausgabe des ersten oder zweiten Controllers eine sicherheits-gerichtete Abschaltung, wenn mindestens einer der Zählerwerte des ersten oder zweiten Zählers unterhalb des minimalen Wertes des Referenzbereichs liegt. Dadurch werden die laufenden Prozesse, die ansonsten ausgeführt werden, und von einen P1-Interrupt nur kurz unterbrochen werden, nicht weiter ausgeführt. Dies ermöglicht eine sehr schnelle Überführung der Sicherheitssteuerung in einen Modus der sicherheits-gerichteten Abschaltung. Da das Taktintervall des ersten Taktsignals bekannt ist, ist die Zeitspanne bis wann der Fehler in dieser Situation entdeckt wird, auch exakt bestimmbar.

Bevorzugt initiiert der erste und/oder der zweite Controller weiterhin eine sicherheits-gerichtete Abschaltung wenn mindestens einer der Zählerwerte des ersten oder zweiten Zählers den maximalen Wert des Referenzbereichs überschreitet. Dazu erzeugt bevorzugt der entsprechende erste und/oder zweite Zähler einen Zählerinterrupt bzw. einen Po-Interrupt-Request, welcher ein P0-Interrupt auslöst. Dadurch, dass die Frequenz des zweiten Taktsignals sowie der maximaler Wert des Referenzbereichs bekannt sind, ist ebenfalls eine exakte Zeitangabe, wann in diesem Fall der P0-Interrupt ausgeführt wird, möglich. Zusätzlich kann durch das direkte Auslösen eines P0-Interrupts, unter Verwendung der entsprechenden ersten und/oder zweiten Zähler, sehr schnell auf einen detektierten Fehler reagiert werden. Ist das Referenzsignal, also das zweite Taktsignal, schneller als das erste Taktsignal, wirkt sich dies genauso aus, wie wenn das erste Taktsignal gegenüber dem zweiten Taktsignal langsamer wäre. In beiden Fällen wird die Sicherheitssteuerung innerhalb einer definierten Zeit sicherheits-gerichtet abgeschaltet.

Bevorzugt wird die Fehlerausgabe bereits während eines P1-Interrupts bereitgestellt. Das Zeitverhalten des ersten und des zweiten Taktsignals zueinander wird innerhalb kurzer Zeit auf Abweichung überprüft. Dies führt zu sehr kurzen Reaktionszeiten und garantiert eine kontinuierliche Überwachung der Sicherheitssteuerung auf Takt- bzw. Frequenzfehler.

Die oben erwähnten Aufgaben werden auch gelöst durch ein Verfahren zum Betreiben einer Sicherheitssteuerung, das einen ersten Controller eingerichtet zum Steuern einer Anlage oder eines Prozesses mit einem ersten Taktgeber und einen separaten zweiten Controller eingerichtet zum Steuern einer Anlage oder eines Prozesse mit einem zweiten Taktgeber aufweist, wobei das Verfahren die folgenden Schritte aufweist: Erzeugen eines ersten Taktsignals durch den ersten Taktgeber; Erzeugen eines, von dem ersten Taktsignal unabhängigen, zweiten Taktsignals durch den zweiten Taktgeber; Ausgeben des ersten Taktsignals an einem ersten Eingang des ersten Controllers und an einem ersten Eingang des zweiten Controllers wobei das erste Taktsignal ein gemeinsames Taktsignal zum synchronen Ausführen von Programmen auf dem ersten und zweiten Controller ist; und Ausgeben des zweiten Taktsignals an einem zweiten Eingang des ersten Controllers und an einem zweiten Eingang des zweiten Controllers wobei die Frequenz des zweiten Taktsignals höher ist als die Frequenz des ersten Taktsignals.

Dadurch, dass ein gemeinsames Taktsignal an beiden Controllern bereitgestellt wird, ist ein synchrones Ausführen der Programme auf den beiden Controllern möglich. Außerdem, da die beiden Taktsignale unabhängig voneinander erzeugt werden, können sie zum gegenseitigen Vergleich auf mögliche Takt- bzw. Frequenzfehler verwendet werden. Bevorzugt wird das erste Taktsignal zum synchronen Ausführen von zwei identischen oder teilidentischen Programmen auf dem ersten und dem zweiten Controller verwendet. Bevorzugt wird das zweite Taktsignal als Referenztaktsignal für das erste Taktsignal verwendet. Da das erste und das zweite Taktsignal jeweils an einem separaten Eingang an dem ersten und dem zweiten Controller bereitgestellt wird, können beide Taktsignale gleichzeitig und unabhängig voneinander in jedem Controller verwendet und von jedem Controller überwacht werden.

Die Frequenz des zweiten Taktsignals ist höher als die Frequenz des ersten Taktsignals. Dadurch kann eine ganzzahlige Anzahl von Takten des zweiten Taktsignals ermittelt werden, die während eines Taktintervalls des ersten Taktsignals auftritt. Je größer der Frequenzunterschied ist, desto genauer können Frequenzabweichungen des ersten Taktsignals und des zweiten Taktsignals zu ihrem jeweiligen Sollwert detektiert werden.
Bevorzugt weist das Verfahren weiterhin eine Prüfung des Zählerstandes des zweiten Taktsignals durch den ersten Zähler im ersten Controller und durch den zweiten Zähler im zweiten Controller auf. Durch das Zählen von Takten des zweiten Taktsignals und eine Prüfung des Zählerstandes kann die Taktfrequenz des ersten Taktsignals sehr einfach bestimmt werden. Dabei sind die Zähler bevorzugt Hardwarezähler. Bevorzugt können die Zähler ihren Zählerstand hochzählen oder von einem Ausgangswert runterzählen.

Erfindungsgemäß weist das Verfahren weiterhin die folgenden Schritte auf: Auslösen eines P1-Interrupts in dem ersten und dem zweiten Controller durch das erste Taktsignal; Bestimmen der Anzahl der Takte des zweiten Taktsignals seit einem vorhergehenden P1-Interrupt durch den ersten Zähler und den zweiten Zähler; in Korrelation bringen des Zählerstands des ersten Zählers im ersten Controller und/oder des zweiten Zählers im zweiten Controller mit der Zeit zwischen zwei P1-Interrupts; und Bereitstellen einer Fehlerausgabe durch den ersten Controller und/oder durch den zweiten Controller, wenn der Zählerstand des jeweiligen ersten oder zweiten Zählers außerhalb seines Referenzbereichs liegt.

Durch diese Verfahrensschritte wird ein Fehler erkannt und ausgegeben, wenn sich die Taktfrequenz des ersten oder zweiten Taktgebers gegenüber ihrer jeweiligen Sollfrequenz signifikant verändert. Durch diese Abweichung vom Sollwert wird ein Toleranzbereich über- oder unterschritten. Der Toleranzbereich stellt sicher, dass geringe Abweichungen vom Sollwert tolerabel sind. Das Verlassen des Toleranzbereichs wird dann durch die Controller erkannt, indem sie den Zählerstand des ersten oder zweiten Zählers mit seinem Referenzbereich vergleichen. Mit diesem einfachen Verfahren ist ein zuverlässiges Erkennen von Frequenzabweichungen des ersten oder zweiten Taktgebers möglich. Ein Fehler in der Synchronität der beiden Controller der Sicherheitssteuerung wird damit zuverlässig detektiert. Durch eine Festlegung der Frequenz des ersten und zweiten Taktsignals und des Referenzbereichs ist dann eine exakte Angabe von Reaktionszeiten der Sicherheitssteuerung möglich.

Dabei werden bevorzugt während eines P1-Interrupts Prozesse der Priorität 1, d.h. Prozesse mit hoher Priorität, gestartet. Und bevorzugt wird ein P1-Interrupt mit einer Flanke eines P1-Interrupt-Requests ausgelöst. Zusätzlich wird bevorzugt der Zählerstand des ersten Zählers und der Zählerstand des zweiten Zählers während eines P1-Interrupts ausgewertet. Bevorzugt werden die Zählerstände des ersten und des zweiten Zählers mittels eines Fensterkomparators mit der Zeit zwischen zwei P1-Interrupts in Korrelation gebracht. Dabei sind die P1-Interrupts bevorzugt zwei aufeinanderfolgende P1-Interrupts. Der Referenzbereich ist bevorzugt eine, aufgrund der Frequenz des ersten Taktsignals und der Frequenz des zweiten Taktsignals, zu erwartende Anzahl von Takten mit einem bestimmten Toleranzbereich, welcher einen maximalen Wert und einen minimalen Wert des Referenzbereichs definiert. Bevorzugt lassen sich der maximale und der minimale Wert des Referenzbereichs beliebig festlegen, so dass eine individuelle Anpassung der zulässigen Frequenzabweichung möglich ist.

Bevorzugt weist das Verfahren weiterhin die Schritte einer sicherheits-gerichteten Abschaltung auf, welche durch die Fehlerausgabe des ersten oder zweiten Controllers bewirkt wird, wenn mindestens einer der Zählerwerte des ersten oder zweiten Zählers unterhalb des minimalen Wertes des Referenzbereichs liegt. Dadurch werden die laufenden Prozesse, die sonst ausgeführt werden, und von einen P1-Interrupt nur kurz unterbrochen werden, nicht weiter ausgeführt. Dies ermöglicht eine sehr schnelle Überführung der Sicherheitssteuerung in einen Modus der sicherheits-gerichteten Abschaltung. Da das Taktintervall des ersten Taktsignals bekannt ist, ist die Zeitspanne, bis wann der Fehler in dieser Situation entdeckt wird, auch exakt bestimmbar.

Bevorzugt weist das Verfahren weiterhin die Schritte einer sicherheits-gerichteten Abschaltung auf, welche durch den ersten und/oder den zweiten Zähler initiiert wird, wenn mindestens einer der Zählerwerte des ersten oder zweiten Zählers den maximalen Wert des Referenzbereichs überschreitet. Dazu erzeugt bevorzugt der entsprechende erste und/oder zweite Zähler einen Zählerinterrupt bzw. einen P0-Interrupt-Request, welcher einen P0-Interrupt auslöst. Dadurch, dass die Frequenz des zweiten Taktsignals sowie der maximaler Wert des Referenzbereichs bekannt sind, ist eine exakte Zeitvorhersage, wann in diesem Fall der P0-Interrupt spätestens ausgeführt wird, möglich. Zusätzlich ist durch das direkte Auslösen eines P0-Interrupts durch den entsprechenden ersten und/oder zweiten Zähler eine sehr schnelle Reaktion auf den detektierten Fehler möglich.

Bevorzugt wird die Fehlerausgabe während eines P1-Interrupts bereitgestellt. Das Zeitverhalten des ersten und des zweiten Taktsignals zueinander wird innerhalb kurzer Zeit auf Abweichung überprüft. Dies führt zu sehr kurzen Reaktionszeiten und garantiert eine kontinuierliche Überwachung der Sicherheitssteuerung auf Taktfehler.

### 4. Kurze Beschreibung der Zeichnungen

Im Folgenden werden bevorzugte Ausführungsformen der Erfindung mit Bezug auf die beigefügten Figuren beschrieben, in denen zeigt:
- Fig. 1: eine schematische Ansicht einer bevorzugten Ausführungsform einer Sicherheitssteuerung mit dargestellten Signalverläufen;
- Fig. 2: eine schematische Ansicht der Signalverläufe im Normalbetrieb der Sicherheitssteuerung nach Fig. 1;
- Fig. 3: eine schematische Ansicht der Signalverläufe bei einem fehlerhaft verlängerten Taktintervall des ersten Taktsignals;
- Fig. 4: eine schematische Ansicht der Signalverläufe bei einem fehlerhaft verkürzten Taktintervall des ersten Taktsignals;
- Fig. 5: eine schematische Ansicht der Signalverläufe bei einem fehlerhaft verkürzten Taktintervall des zweiten Taktsignals; und
- Fig. 6: eine schematische Ansicht der Signalverläufe bei einem fehlerhaft verlängerten Taktintervall des zweiten Taktsignals.

### 5. Beschreibung von Ausführungsformen

Im Folgenden werden bevorzugte Ausführungsformen der Erfindung im Detail mit Bezug auf die Figuren beschrieben.

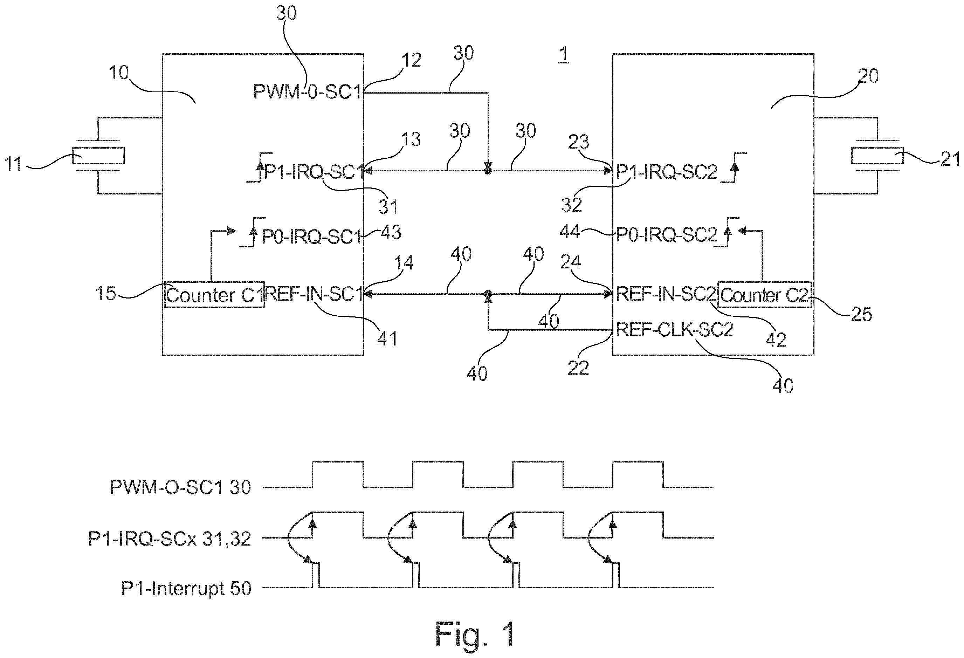

Fig. 1 zeigt eine schematische Ansicht einer Sicherheitssteuerung 1, welche einen ersten Controller 10 und einen zweiten Controller 20 aufweist. Der erste Controller 10 weist einen ersten Taktgeber 11 und der zweite Controller 20 weist einen zweiten Taktgeber 21 auf. Der erste Taktgeber 11 erzeugt im ersten Controller 10 ein erstes Taktsignal (PWM_O_SC1) 30. Der zweite Taktgeber 21 erzeugt im zweiten Controller 20 ein zweites Taktsignal (REF_CLK_SC2) 40.

Das erste Taktsignal 30 wird gleichzeitig an einen ersten interrupt-fähigen Eingang 13 des ersten Controllers 10 und an einen ersten interrupt-fähigen Eingang 23 des zweiten Controllers 20 geleitet. Im ersten Controller 10 erzeugt das erste Taktsignal 30 einen P1-Interrupt-Request (P1_IRQ_SC1) 31, welcher einen P1-Interrupt 50 auslöst. Im zweiten Controller 20 erzeugt das erste Taktsignal 30 einen P1-Interrupt-Request (P1_IRQ_SC2) 32, welcher einen P1-Interrupt 50 auslöst. Das P1-Interrupt 50 wird zu einer Flanke eines P1-Interrupt-Requests 31, 32 erzeugt.

Das zweite Taktsignal 40 wird gleichzeitig an einen zweiten Eingang 14 des ersten Controllers 10 und an einen zweiten Eingang 24 des zweiten Controllers 20 geleitet. Im ersten Controller 10 wird das zweite Taktsignal 40 als Eingangssignal (REF_IN_SC1) 41 an einen ersten Zähler 15 weitergeleitet. Im zweiten Controller 20 wird das zweite Taktsignal 40 als Eingangssignal (REF_IN_SC2) 42 an einen zweiten Zähler 25 geleitet.

In dem ersten und dem zweiten Zähler 15, 25 wird die Anzahl der Takte der jeweiligen Eingangssignale 41, 42 gezählt. Dabei kann nach oben oder nach unten gezählt werden. Der erste Zähler 15 ist in der Lage einen P0-Interrupt-Request (P0_IRQ_SC1) 43 zu erzeugen. Der zweite Zähler 25 ist in der Lage einen P0-Interrupt-Request (P0_IRQ_SC2) 44 zu erzeugen. Beide P0-Interrupt-Requests 43, 44 lösen dann im jeweiligen Controller 10, 20 einen P0-Interrupt 52 aus. Der P0-Interrupt wird in dieser Ausführungsform als permanenter P0-Interrupt 58 ausgeführt, falls ein Fehler auftritt.

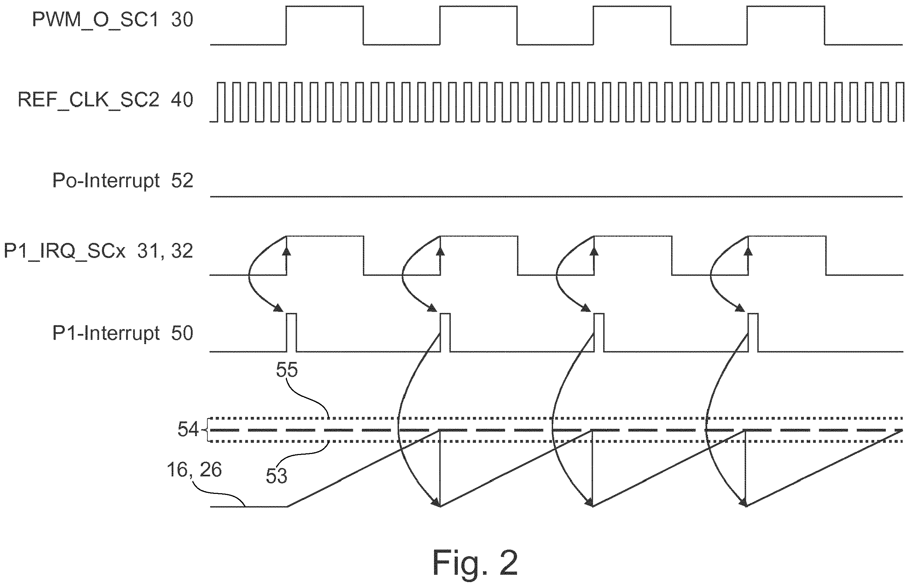

Fig. 2 zeigt einen schematischen Signalverlauf im normalen Betrieb, d.h. wenn das erste und das zweite Taktsignal 30, 40 jeweils ihre vorbestimmten Taktintervalle bzw. Frequenzen einhalten. Das zweite Taktsignal 40 hat dabei eine höhere Frequenz als das erste Taktsignal 30.

Durch das erste Taktsignal 30 werden die P1-Interrupt-Requests 31, 32 erzeugt, welche wiederum einen P1-Interrupt 50 in ihrem jeweiligen Controller 10, 20 erzeugen, um den Start der Programmabläufe in den Controllern 10, 20 zu synchronisieren.

Die Anzahl der Takte des zweiten Taktsignals 40 wird in dem ersten und dem zweiten Zähler 15, 25 des jeweiligen Controllers 10, 20 gezählt. In diesem Ausführungsbeispiel wird nach oben gezählt, so dass die Zählerstände 16, 26 der beiden entsprechenden Zähler 15, 25 ansteigen.

Wird ein P1-Interrupt 50 ausgelöst, werden die Zählerstände 16, 26 bevorzugt wieder auf ihren ursprünglichen Wert zurückgesetzt. Eine weitere bevorzugte Ausführungsform ist bei einem laufenden Zähler die Bildung der Differenz zum letzten erfassten Zählerstand. Befindet sich die Sicherheitssteuerung 1 im normalen Betrieb, d.h. die erste und die zweite Frequenz 30, 40 halten ihre vorbestimmten Werte ein, dann liegen die maximalen Zählerwerte 16, 26, unmittelbar vor der Auswertung innerhalb ihres Referenzbereichs 54, welcher die zulässige Toleranz der Frequenzabweichungen definiert, wie in Fig. 2 dargestellt.

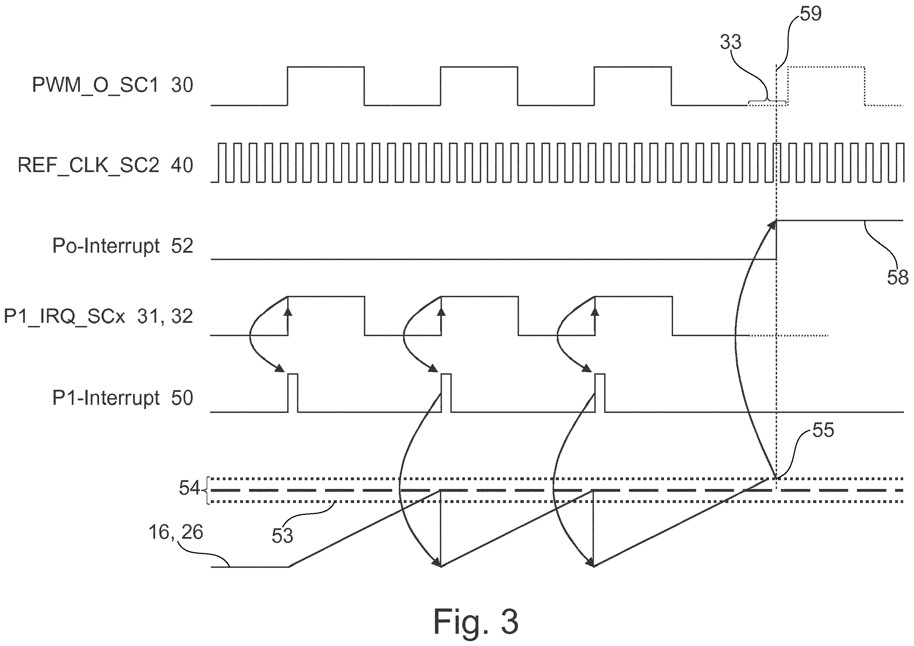

Fig. 3 zeigt die schematischen Signalverläufe im Fall eines fehlerhaft verlängerten Taktintervalls 33 des ersten Taktsignals 30. Durch das Verzögern des Taktes des ersten Taktsignals 30 werden keine P1-Interrupt-Requests 31, 32 ausgelöst, und somit auch kein P1-Interrupt 50. Dadurch steigen die Zählerwerte 16, 26 der beiden Zähler 15, 25 immer weiter an, bis sie den maximalen Wert 55 des Referenzbereichs 54 erreichen bzw. überschreiten.

Mindestens einer der beiden Zähler 15, 25 löst daraufhin einen entsprechenden P0-Interrupt-Request 43, 44 aus und ein permanenter P0-Interrupt 58 wird erzeugt. Ab dem Zeitpunkt 59 an dem ein permanenter Interrupt 58 erzeugt wird, wird die Sicherheitssteuerung sicherheits-gerichtet abgeschaltet.

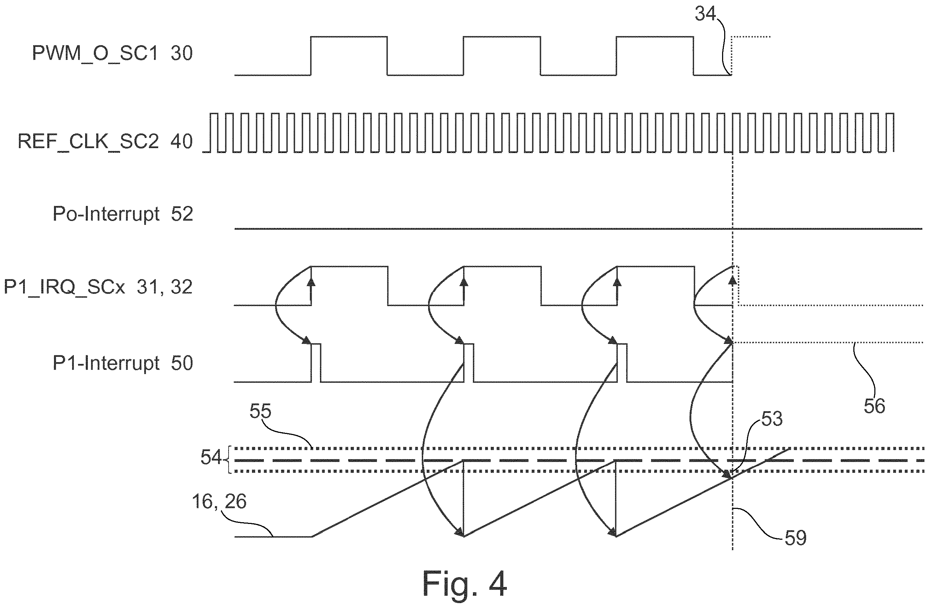

Fig. 4 zeigt die schematischen Signalverläufe im Fall eines fehlerhaft verkürzten Taktintervalls 34 des ersten Taktsignals 30. Durch die Flanke des ersten Taktsignals 30 werden P1-Interrupt-Requests 31, 32 ausgelöst, und somit auch P1-Interrupts 50.

Da dies allerdings zu einem früheren Zeitpunkt geschieht, als vorherbestimmt, liegen die Zählerwerte 16, 26 der beiden Zähler 15, 25 unterhalb des minimalen Wertes 53 des Referenzbereichs 54. Als Reaktion auf die fehlerbehafteten Zählerwerte 16, 26 bleibt ein permanenter P1-Interrupt 56 bestehen. Ab dem Zeitpunkt 59 an dem ein permanenter Interrupt 56 erzeugt wird, wird die Sicherheitssteuerung Sicherheitsgerichtet abgeschaltet.

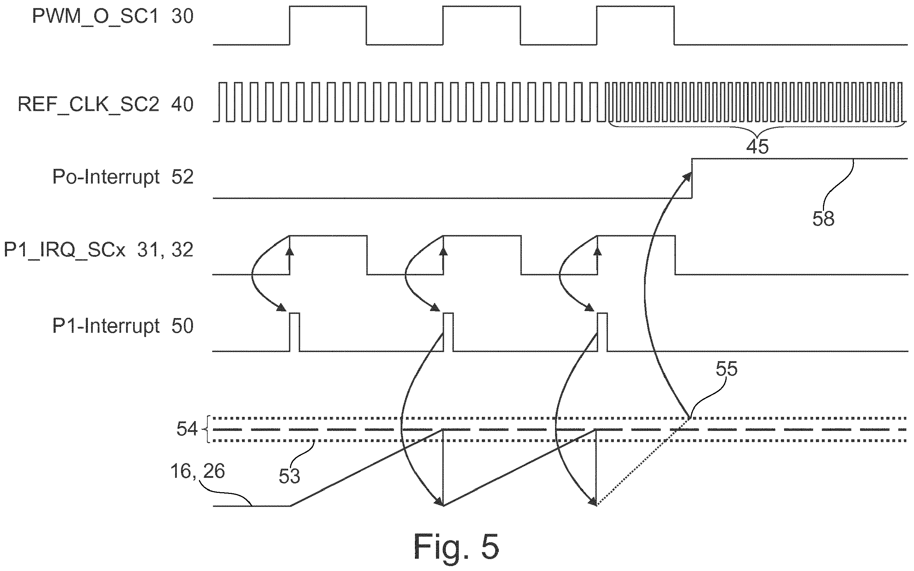

Fig. 5 zeigt die schematischen Signalverläufe im Fall eines fehlerhaft verkürzten Taktintervalls 45 des zweiten Taktsignals 40. Durch die größere Anzahl von Takten des zweiten Taktsignals 40 während eines Taktintervalls des ersten Taktsignals 30 steigen die Zählerwerte 16, 26 der Zähler 15, 25 schneller an, als vorherbestimmt. Dadurch erreichen die Zählerwerte 16, 26 den maximalen Wert 55 des Referenzbereichs 54 noch bevor ein P1-Interrupt 50 ausgelöst wird und die Zählerwerte 16, 26 ausgewertet werden.

Mit Erreichen des maximalen Wertes 55 des Referenzbereichs 54 wird von mindestens einem der Zähler 15, 25 ein entsprechender P0-Interrupt-Request 43, 44 ausgelöst, und dadurch wiederum ein permanenter P0-Interrupt 58 erzeugt, was zur sicherheits-gerichteten Abschaltung der Sicherheitssteuerung führt.

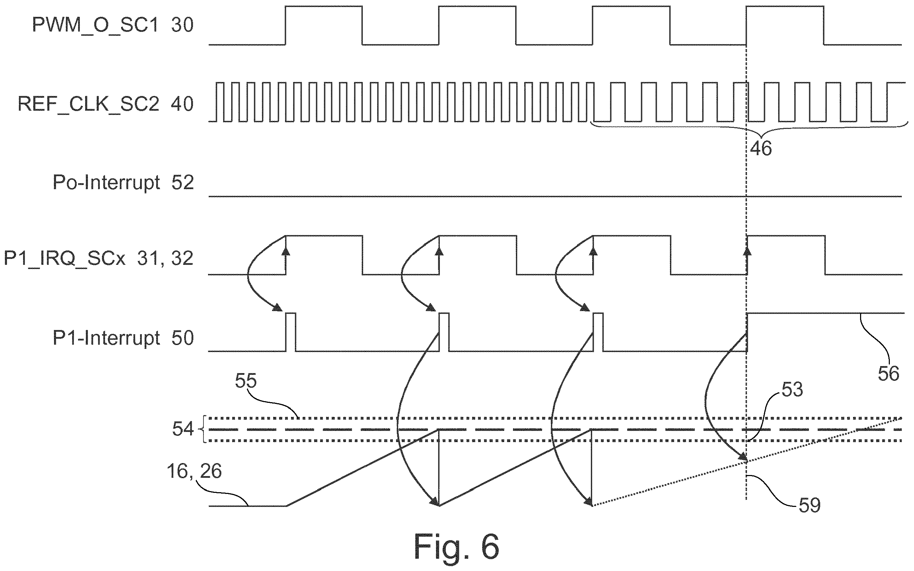

Fig. 6 zeigt die schematischen Signalverläufe im Fall eines fehlerhaft verlängerten Taktintervalls 46 des zweiten Taktsignals 40. Mit einer Flanke des ersten Taktsignals 30 werden die P1-Interrupt-Requests 31, 32 ausgeführt, wodurch ein P1-Interrupt 50 erzeugt wird.

Während des P1-Interrupts 50 werden die Zählerstände 16, 26 der beiden Zähler 15, 25 ermittelt. Da das zweite Taktsignal 40 größere Taktintervalle hat, als vorherbestimmt, ist die Anzahl der Takte des zweiten Taktsignals 40 während eines Taktintervalls des ersten Taktsignals 30 geringer, und somit sind die Zählerstände 16, 26 kleiner als erwartet und liegen unterhalb des minimalen Wertes 53 des Referenzbereich 54. Als Reaktion auf die fehlerbehafteten Zählerwerte 16, 26 bleibt ein permanenter Pi-Interrupt 56 bestehen, was zur sicherheits-gerichteten Abschaltung der Sicherheitssteuerung führt.

Entsprechend führen Abweichungen der Taktfrequenz des ersten und zweiten Taktsignals von der jeweiligen Sollfrequenz zu einer sicheren Abschaltung der Sicherheitssteuerung. Dadurch werden Fehler in der Synchronität der beiden Controller vermieden und es wird sichergestellt, dass die Sicherheitssteuerung innerhalb der erforderlichen Reaktionszeit eine sicherheits-gerichtete Abschaltung vornehmen kann.

Für eine Sicherheitssteuerung gemäß der vorliegenden Erfindung können Standard Mikrocontroller verwendet werden, die erfindungsgemäß miteinander zeitlich synchronisiert werden. Im Allgemeinen kann die Sicherheitssteuerung aber auch aus mehr als zwei Controllern aufgebaut sein. Dies ermöglicht eine Austauschbarkeit und Skalierbarkeit der Sicherheitssteuerung, wodurch Kosten reduziert oder gering gehalten werden, und die Sicherheitssteuerung flexibel an die jeweilige Aufgabenstellung angepasst werden kann.

### Bezugszeichenliste

- 1: Sicherheitssteuerung
- 10: erster Controller
- 11: erster Taktgeber
- 12: Ausgang am ersten Controller
- 13: erster Eingang am ersten Controller
- 14: zweiter Eingang am ersten Controller
- 15: erster Zähler im ersten Controller
- 16: Zählerstand des ersten Zählers
- 20: zweiter Controller
- 21: zweiter Taktgeber
- 22: Ausgang am zweiten Controller
- 23: erster Eingang am zweiten Controller
- 24: zweiter Eingang am zweiten Controller
- 25: zweiter Zähler im zweiten Controller
- 26: Zählerstand des zweiten Zählers
- 30: erstes Taktsignal
- 31: P1-Interrupt-Request im ersten Controller
- 32: P1-Interrupt-Request im zweiten Controller
- 33: verlängertes Taktintervall des ersten Taktsignals
- 34: verkürztes Taktintervall des ersten Taktsignals
- 40: zweites Taktsignal
- 41: Eingangssignal des zweiten Taktsignals im ersten Controller
- 42: Eingangssignal des zweiten Taktsignals im zweiten Controller
- 43: P0-Interrupt-Request im ersten Controller
- 44: P0-Interrupt-Request im zweiten Controller
- 45: verkürztes Taktintervall des zweiten Taktsignals
- 46: verlängertes Taktintervall des zweiten Taktsignals
- 50: P1-Interrupt
- 52: P0-Interrupt
- 53: minimaler Wert des Referenzbereichs
- 54: Referenzbereich
- 55: maximaler Wert des Referenzbereichs
- 56: permanenter P1-Interrupt
- 58: permanenter P0-Interrupt
- 59: Zeitpunkt des Auslösens eines permanenten Interrupts

## Patentansprüche

1. Sicherheitssteuerung (1), aufweisend:
a) einen ersten Controller (10) eingerichtet zum Steuern einer Anlage oder eines Prozesses mit einem ersten Taktgeber (11) eingerichtet zum Generieren eines ersten Taktsignals (30);
b) einen separaten zweiten Controller (20) eingerichtet zum Steuern der Anlage oder des Prozesses mit einem zweiten Taktgeber (21) eingerichtet zum Generieren eines zweiten Taktsignals (40); wobei
c) das erste Taktsignal (30) an einen ersten Eingang (13) des ersten Controllers (10) und an einen ersten Eingang (23) des zweiten Controllers (20) ausgegeben wird, um ein synchrones Ausführen von Programmen auf dem ersten und zweiten Controller (10, 20) zu ermöglichen; **dadurch gekennzeichnet, dass**
d) das zweite Taktsignal (40) an einen zweiten Eingang (14) des ersten Controllers (10) und an einen zweiten Eingang (24) des zweiten Controllers (20) ausgegeben wird;
e) die Frequenz des zweiten Taktsignals (40) höher ist als die Frequenz des ersten Taktsignals (30);
f) der erste Controller (10) einen ersten Zähler (15) und der zweite Controller (20) einen zweiten Zähler (25) aufweist, und das zweite Taktsignal (40) dem ersten Zähler (15) und dem zweiten Zähler (25) zugeführt wird und die Takte des zweiten Taktsignals (40) von dem ersten und dem zweiten Zähler (15, 25) gezählt werden, um eine ganzzahlige Anzahl von Takten des zweiten Taktsignals zu ermitteln, die während eines Taktintervalls des ersten Taktsignals auftritt;
g) das erste Taktsignal (30) einen Interrupt (50) gleichzeitig in dem ersten und dem zweiten Controller (10, 20) auslöst;
h) der erste Zähler (15) und der zweite Zähler (25) dazu eingerichtet sind, die Anzahl der Takte des zweiten Taktsignals (40) seit einem vorhergehenden Interrupt (50) bestimmen;
i) der erste Controller (10) und/oder der zweite Controller (20) eingerichtet ist, die Zählerstände (16, 26) des jeweiligen ersten oder zweiten Zählers (15, 25) mit der Zeit zwischen zwei Interrupts (50) in Korrelation zu bringen; und
j) der erste Controller (10) und/oder der zweite Controller (20) dazu eingerichtet sind, eine Fehlerausgabe bereit zu stellen, wenn der Controller (10, 20) feststellt, dass der Zählerstand (16, 26) des jeweiligen ersten oder zweiten Zählers (15, 25) außerhalb seines Referenzbereichs (54) liegt.

2. Sicherheitssteuerung gemäß Anspruch 1, wobei die Fehlerausgabe des ersten oder zweiten Controllers (10, 20) eine sicherheits-gerichtete Abschaltung (56) bewirkt, wenn mindestens einer der Zählerwerte (16, 26) des ersten oder zweiten Zählers (15, 25) unterhalb des minimalen Wertes (53) des Referenzbereichs (54) liegt.

3. Sicherheitssteuerung gemäß einem der Ansprüche 1 oder 2, wobei der erste und/oder der zweite Controller (10, 20) eine sicherheits-gerichtete Abschaltung (58) initiiert, wenn mindestens einer der Zählerwerte (16, 26) des ersten oder zweiten Zählers (15, 25) den maximalen Wert (55) des Referenzbereichs (54) überschreitet.

4. Verfahren zum Betreiben einer Sicherheitssteuerung (1), aufweisend einen ersten Controller (10) eingerichtet zum Steuern einer Anlage oder eines Prozesses mit einem ersten Taktgeber (11) und einen separaten zweiten Controller (20) eingerichtet zum Steuern der Anlage oder des Prozesses mit einem zweiten Taktgeber (21), wobei das Verfahren die folgenden Schritte aufweist:
a) Erzeugen eines ersten Taktsignals (30) durch den ersten Taktgeber (11);
b) Erzeugen eines, von dem ersten Taktsignal (30) unabhängigen, zweiten Taktsignals (40) durch den zweiten Taktgeber (21);
c) Ausgeben des ersten Taktsignals (30) an einem ersten Eingang (13) des ersten Controllers (10) und an einem ersten Eingang (23) des zweiten Controllers (20), um ein synchrones Ausführen von Programmen auf dem ersten und zweiten Controller (10, 20) zu ermöglichen;
d) Ausgeben des zweiten Taktsignals (40) an einen zweiten Eingang (14) des ersten Controllers (10) und an einen zweiten Eingang (24) des zweiten Controllers (20), wobei die Frequenz des zweiten Taktsignals (40) höher ist, als die Frequenz des ersten Taktsignals (30);
e) Zählens des zweiten Taktsignals (40) durch einen ersten Zähler (15) im ersten Controller (10) und durch einen zweiten Zähler (25) im zweiten Controller (20);
f) Ermitteln einer ganzzahligen Anzahl von Takten des zweiten Taktsignals (40), die während eines Taktintervalls des ersten Taktsignals (30) auftritt;
g) Auslösen eines Interrupts (50) in dem ersten und dem zweiten Controller (10, 20) durch das erste Taktsignal (30);
h) Bestimmen der Anzahl der Takte des zweiten Taktsignals (40) seit einem vorhergehenden Interrupt (50) durch den ersten Zähler (15) und den zweiten Zähler (25);
i) In Korrelation bringen des Zählerstands (16, 26) des ersten Zählers (15) im ersten Controller (10) und/oder des zweiten Zählers (25) im zweiten Controller (20) mit der Zeit zwischen zwei Interrupts (50); und
j) Bereitstellen einer Fehlerausgabe durch den ersten Controller (10) und/oder durch den zweiten Controller (20), wenn der Zählerstand (16, 26) des jeweiligen ersten oder zweiten Zählers (15, 25) außerhalb seines Referenzbereichs (54) liegt.

5. Verfahren gemäß Anspruch 4, weiterhin aufweisend die Schritte einer sicherheits-gerichteten Abschaltung (56), welche durch die Fehlerausgabe des ersten oder zweiten Controllers (10, 20) bewirkt wird, wenn mindestens einer der Zählerwerte (16, 26) des ersten oder zweiten Zählers (15, 25) unterhalb des minimalen Wertes (53) des Referenzbereichs (54) liegt.

6. Verfahren gemäß einem der Ansprüche 4 oder 5, weiterhin aufweisend die Schritte einer sicherheits-gerichteten Abschaltung (58), welche durch den ersten und/oder den zweiten Zähler (15, 25) initiiert wird, wenn mindestens einer der Zählerwerte (16, 26) des ersten oder zweiten Zählers (15, 25) den maximalen Wert (55) des Referenzbereichs (54) überschreitet.

## Claims

1. Safety controller (1), comprising:
a) a first controller (10) suitable for controlling a facility or a process having a first clock generator (11) suitable for generating a first clock signal (30);
b) a separate second controller (20) suitable for controlling the facility or the process having a second clock generator (21) suitable for generating a second clock signal (40); wherein
c) the first clock signal (30) is output to a first input (13) of the first controller (10) and to a first input (23) of the second controller (20) for allowing a synchronous processing of programs on the first and second controller (10, 20); **characterized in that**,
d) the second clock signal (40) is output to a second input (14) of the first controller (10) and to a second input (24) of the second controller (20);
e) the frequency of the second clock signal (40) is higher than the frequency of the first clock signal (30);
f) the first controller (10) comprises a first counter (15) and the second controller (20) comprises a second counter (25), and the second clock signal (40) is routed to the first counter (15) and to the second counter (25) and the clocks of the second clock signal (40) are counted by means of the first and the second counter (15, 25) for determining an integer number of clocks of the second clock signal, that appears during a clock interval of the first clock signal;
g) the first clock signal (30) triggers an interrupt (50) simultaneously in the first and second controllers (10, 20);
h) the first counter (15) and the second counter (25) are suitable for determining the number of clocks of the second clock signal (40) since a previous interrupt (50);
i) the first controller (10) and/or the second controller (20) are suitable for correlating the counter readings (16, 26) of the respective first or second counter (15, 25) with the time interval between two interrupts (50); and
j) the first controller (10) and/or the second controller (20) are suitable for providing an error output when the controller (10, 20) determines that the counter reading (16, 26) of the respective first or second counter (15, 25) is outside its reference range (54).

2. Safety controller according to claim 1, wherein the error output of the first or second controller (10, 20) effects a safety-related shutdown (56) if at least one of the counter readings (16, 26) of the first or second counter (15, 25) is below the minimum value (53) of the reference range (54).

3. Safety controller according to any one of claims 1 or 2, wherein the first and/or second controller (10, 20) initiates a safety-related shutdown (58) if at least one of the counter readings (16, 26) of the first or second counter (15, 25) exceeds the maximum value (55) of the reference range (54).

4. Method for operating a safety controller (1) comprising a first controller (10) suitable for controlling a facility or a process having a first clock generator (11) and a separate second controller (20) suitable for controlling the facility or the process having a second clock generator (21), wherein the method comprises the following steps:
a) generating a first clock signal (30) by means of the first clock generator (11);
b) generating a second clock signal (40) independent from the first clock signal (30) by means of the second clock generator (21);
c) outputting the first clock signal (30) to a first input (13) of the first controller (10) and at a first input (23) of the second controller (20) for allowing a synchronous processing of programs on the first and second controller (10, 20);
d) outputting the second clock signal (40) to a second input (14) of the first controller (10) and to a second input (24) of the second controller (20), wherein the frequency of the second clock signal (40) is higher than the frequency of the first clock signal (30);
e) counting the second clock signal (40) by means of a first counter (15) in the first controller (10) and by means of a second counter (25) in the second controller (20);
f) determining an integer number of clocks of the second clock signal (40) appearing during a clock interval of the first clock signal (30);
g) triggering an interrupt (50) in the first and second controllers (10, 20) by means of the first clock signal (30);
h) determining the number of clocks of the second clock signal (40) since a previous interrupt (50) by means of the first counter (15) and the second counter (25);
i) correlating the counter reading (16, 26) of the first counter (15) in the first controller (10) and/or of the second counter (25) in the second controller (20) with the time between two interrupts (50); and
j) providing an error output by the first controller (10) and/or by the second controller (20) when the counter reading (16, 26) of the respective first or second counter (15, 25) is outside its reference range (54).

5. Method according to claim 4, further comprising the steps of a safety-related shutdown (56) effected by the error output of the first or second controller (10, 20) if at least one of the counter readings (16, 26) of the first or second counter (15, 25) is below the minimum value (53) of the reference range (54).

6. Method according to any one of claims 4 or 5, further comprising the steps of a safety-related shutdown (58) which is initiated by the first and/or the second counter (15, 25) if at least one of the counter readings (16, 26) of the first or second counter (15, 25) exceeds the maximum value (55) of the reference range (54).

## Revendications

1. Commande de sécurité (1) comprenant :
a) un premier contrôleur (10), agencé pour commander une installation ou un processus avec un premier séquenceur (11) agencé pour générer un premier signal de séquencement (30), ;
b) un deuxième contrôleur séparé (20), agencé pour commander l'installation ou le processus avec un deuxième séquenceur (21) agencé pour générer un deuxième signal de séquencement (40) ;
c) le premier signal de séquencement (30) étant envoyé à une première entrée (13) du premier contrôleur (10) et à une première entrée (23) du deuxième contrôleur (20) pour permettre une exécution synchrone de programmes sur le premier et le deuxième contrôleur (10, 20) ; **caractérisée en ce que**
d) le deuxième signal de séquencement (40) est envoyé à une deuxième entrée (14) du premier contrôleur (10) et à une deuxième entrée (24) du deuxième contrôleur (20) ;
e) la fréquence du deuxième signal de séquencement (40) est supérieure à la fréquence du premier signal de séquencement (30) ;
f) le premier contrôleur (10) comporte un premier compteur (15) et le deuxième contrôleur (20) comporte un deuxième compteur (25), et le deuxième signal de séquencement (40) est transmis au premier compteur (15) et au deuxième compteur (25), et les séquencements du deuxième signal de séquencement (40) sont comptés par le premier et par le deuxième compteur (15, 25) pour détecter un nombre entier de séquencements du deuxième signal de séquencement survenant pendant un intervalle de séquencement du premier signal de séquencement ;
g) le premier signal de séquencement (30) déclenche une interruption (50) simultanément dans le premier et dans le second contrôleur (10, 20) ;
h) le premier compteur (15) et le deuxième compteur (25) sont agencés pour déterminer le nombre de séquencements du deuxième signal de séquencement (40) depuis une interruption antérieure (50) ;
i) le premier contrôleur (10) et/ou le deuxième contrôleur (20) sont agencés pour mettre les positions de compteurs (16, 26) du premier ou du deuxième compteur respectif (15, 25) en corrélation avec le temps entre deux interruptions (50) ; et
j) le premier contrôleur (10) et/ou le deuxième contrôleur (20) sont agencés pour fournir un message d'erreur si le contrôleur (10, 20) constate que la position de compteur (16, 26) du premier ou du deuxième compteur respectif (15, 25) se trouve à l'extérieur de sa plage de référence (54).

2. Commande de sécurité selon la revendication 1, dans laquelle le message d'erreur du premier ou du second contrôleur (10, 20) provoquent une coupure orientée sécurité (56) si au moins une des valeurs de compteurs (16, 26) du premier ou du deuxième compteur (15, 25) est inférieure à la valeur minimale (53) de la plage de référence (54).

3. Commande de sécurité selon l'une des revendications 1 ou 2, dans laquelle le premier et/ou le second contrôleur (10, 20) déclenchent une coupure orientée sécurité (58) si au moins une des valeurs de compteurs (16, 26) du premier ou du deuxième compteur (15, 25) excède la valeur maximale (55) de la plage de référence (54).

4. Procédé de mise en œuvre d'une commande de sécurité (1) comprenant un premier contrôleur (10) agencé pour commander une installation ou un processus avec un premier séquenceur (11), et un deuxième contrôleur séparé (20) agencé pour commander l'installation ou le processus avec un deuxième séquenceur (21), le procédé comprenant les étapes suivantes :
a) génération d'un premier signal de séquencement (30) par le premier séquenceur (11) ;
b) génération d'un deuxième signal de séquencement (40), indépendant du premier signal de séquencement (30), par le deuxième séquenceur (21) ;
c) envoi du premier signal de séquencement (30) à une première entrée (13) du premier contrôleur (10) et à une première entrée (23) du deuxième contrôleur (20) pour permettre une exécution synchrone de programmes sur le premier et le deuxième contrôleur (10, 20) ;
d) envoi du deuxième signal de séquencement (40) à une deuxième entrée (14) du premier contrôleur (10) et à une deuxième entrée (24) du deuxième contrôleur (20), la fréquence du deuxième signal de séquencement (40) étant supérieure à la fréquence du premier signal de séquencement (30) ;
e) comptage du deuxième signal de séquencement (40) par un premier compteur (15) dans le premier contrôleur (10) et par un deuxième compteur (25) dans le deuxième contrôleur (20) ;
f) détection d'un nombre entier de séquencements du deuxième signal de séquencement (40) survenant pendant un intervalle de séquencement du premier signal de séquencement (30) ;
g) déclenchement d'une interruption (50) dans le premier et dans le deuxième contrôleur (10, 20) par le premier signal de séquencement (30) ;
h) détermination du nombre de séquencements du deuxième signal de séquencement (40) depuis une interruption antérieure (50) par le premier compteur (15) et le deuxième compteur (25) ;
i) mise en corrélation de la position de compteur (16, 26) du premier compteur (15) dans le premier contrôleur (10) et/ou du deuxième compteur (25) dans le deuxième contrôleur (20) avec le temps entre deux interruptions (50) ; et
j) fourniture d'un message d'erreur par le premier contrôleur (10) et/ou par le deuxième contrôleur (20) si la position de compteur (16, 26) du premier ou du deuxième compteur respectif (15, 25) se trouve à l'extérieur de sa plage de référence (54).

5. Procédé selon la revendication 4, comprenant en outre des étapes de coupure orientée sécurité (56), laquelle est provoquée par le message d'erreur du premier ou du deuxième contrôleur (10, 20) si au moins l'une des valeurs de compteur (16, 26) du premier ou du deuxième compteur (15, 25) est inférieure à la valeur minimale (53) de la plage de référence (54).

6. Procédé selon l'une des revendications 4 ou 5, comprenant en outre des étapes de coupure orientée sécurité (58), laquelle est déclenchée par le premier et/ou par le second compteur (15, 25) si au moins une des valeurs de compteur (16, 26) du premier ou du deuxième compteur (15, 25) excède la valeur maximale (55) de la plage de référence (54).
